(19) Europäisches Patentamt
European Patent Office
Office européen des brevets

(11) **EP 2 268 030 A1**

(12) **DEMANDE DE BREVET EUROPEEN**

(43) Date de publication:
**29.12.2010 Bulletin 2010/52**

(51) Int Cl.:
***H04N 7/26*** *(2006.01)*   ***H04N 7/50*** *(2006.01)*

(21) Numéro de dépôt: **09305583.8**

(22) Date de dépôt: **22.06.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(71) Demandeur: **Thomson Licensing**
**92130 Issy-les-Moulineaux (FR)**

(72) Inventeurs:
• **Racape, Fabien**
**92648, BOULOGNE CEDEX (FR)**

• **Vieron, Jérôme**
**92648, BOULOGNE CEDEX (FR)**
• **François, Edouard**
**92648, BOULOGNE CEDEX (FR)**
• **Thoreau, Dominique**
**92648, BOULOGNE CEDEX (FR)**

(74) Mandataire: **Le Dantec, Claude**
**Technicolor**
**1-5 rue Jeanne d'Arc**
**92130 Issy-les-Moulineaux (FR)**

(54) **Codage d'image avec raffinement de la texture en utilisant des sous-régions représentatives**

(57)    L'invention concerne un procédé de codage d'une image divisée en sous-régions. Le procédé de codage comprend les étapes suivantes :
-extraire (10) de l'image des sous-régions représentatives des autres sous-régions de l'image;
- coder (12) les sous-régions représentatives des autres sous-régions à une première qualité (Q0) ; et
- coder (12) les autres sous-régions à une seconde qualité (Q1) strictement inférieure à la première qualité (Q0).

FIGURE 1

EP 2 268 030 A1

**Description**

1. <u>Domaine de l'invention</u>

L'invention se rapporte au domaine général du codage d'images. L'invention concerne un procédé de codage et de décodage d'images.

2. <u>Etat de l'art</u>

Il est connu pour coder efficacement une séquence d'images d'utiliser un procédé de codage conforme à la norme H.264. La norme H.264 est notamment décrite dans le document ISO/IEC 14496-10 intitulé « Information technologie - Coding of audio-visual objects - Part 10 : Advanced Video Coding » publié le 15/08/2006. Toutefois, un tel procédé de codage provoque quand même des artefacts notamment dans les régions texturées des images.

3. <u>Résumé de l'invention</u>

L'invention a pour but de pallier au moins un des inconvénients de l'art antérieur. L'invention permet avantageusement de coder les régions texturées des images de manière plus efficace, i.e. avec une meilleure qualité à débit constant ou encore à un débit plus faible à qualité donnée. A cet effet, des régions (« patches » en anglais) d'une image à coder sont identifiées et codées dans un flux F à une qualité supérieure aux autres régions de l'image à coder. Ces régions codées à une qualité supérieure sont ensuite utilisées par le procédé de décodage pour enrichir la texture des régions codées à une qualité inférieure. Le procédé de codage selon l'invention permet une meilleure distribution de l'information dans le flux F en termes de redondance perceptuelle.

4. <u>Listes des figures</u>

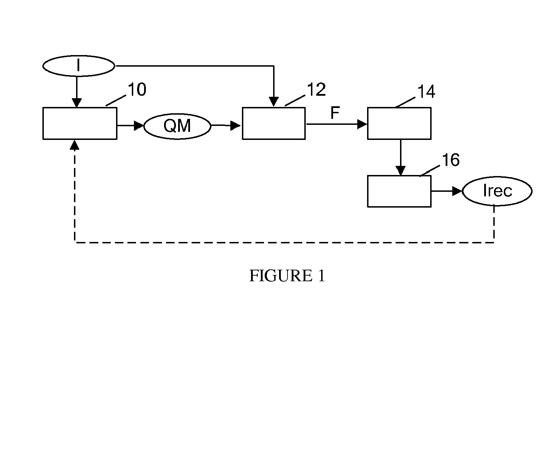

L'invention sera mieux comprise et illustrée au moyen d'exemples de modes de réalisation et de mise en oeuvre avantageux, nullement limitatifs, en référence à la figure1 qui illustre un procédé de codage et de décodage selon l'invention.

5. <u>Description détaillée de l'invention</u>

Les procédés de codage et de décodage sont décrits en lien avec la figure 1. Lors d'une étape 10, des sous-régions représentatives RSR (acronyme anglais de « Representative Sub-Région ») du reste de l'image sont extraites d'une image à coder. L'idée générale consiste à évaluer la redondance entre une sous-région donnée et le reste de l'image. Lorsqu'une sous-région donnée présente une redondance importante avec un nombre important de régions de l'image on déclare cette sous région comme RSR et celle-ci est mise dans le « dictionnaire ».

Selon un premier mode de réalisation, les RSR sont extraites a priori, i.e. les opérations et/ou métriques utilisées dans le choix des RSR ne tient pas compte du processus exact d'exploitation de la redondance qui sera effectuée au décodeur.

Ainsi, diverses solutions sont possibles pour extraire un RSR puisque les opérations ne sont pas symétriques de celles réalisées au décodeur.

Pour l'ensemble des sous-régions SRi possible de l'image, on évalue une métrique Di entre SRi et le reste de l'image.

On garde comme RSR la sous-région SRj qui donne une valeur de métrique Dj maximale ou les N sous-régions SRj qui ont les valeurs de métriques les plus grandes lorsque l'on souhaite extraire les N RSR les plus représentatives de l'image.

La métrique Di peut-être par exemple un calcul d'Information Mutuelle au sens mathématique du terme. L'Information Mutuelle représente une forme de calcul d'entropie conditionnelle. On peut également imaginer calculer une SAD une SSE ou une mesure de corrélation de phase.

Selon une variante de ce premier mode de réalisation, pour l'ensemble des sous-régions SRi possible de l'image les étapes suivantes sont effectuées :

- coder SRi à une qualité donnée Q0 donnée ;
- décoder SRi ;
- coder le reste de l'image à une qualité donnée Q1 (Q1 <Q0) ;
- décoder le reste de l'image ; et
- calculer une métrique Di entre SRi décodé à Q0 et le reste de l'image décodée à Q1.

On garde comme RSR la sous-région SRj qui donne une valeur de métrique Dj maximale ou les N sous-régions SRj qui ont les valeurs de métriques les plus grandes.

Selon un second mode de réalisation, les RSR sont extraites a posteriori, i.e. les opérations et/ou métriques utilisées dans le choix des RSR tiennent compte du processus exact d'exploitation de la redondance qui sera effectuée au décodeur. Selon ce second mode de réalisation, pour l'ensemble des sous-régions SRi possible de l'image les étapes suivantes sont effectuées :

- coder SRi à une qualité donnée Q0 donnée ;
- décoder SRi ;
- coder le reste de l'image à une qualité donnée Q1 (Q1 <Q0) ;
- décoder le reste de l'image ;
- raffiner la texture du reste de l'image en exploitant la texture de SRi à la qualité Q0 ; et
- calculer une métrique Di entre l'image raffinée et sa version de référence, i.e. l'image source.

L'étape de raffinement est décrite plus loin en lien avec le procédé de décodage (étape 16).

On garde la région SRj qui donnera la distorsion Dj minimale. La métrique Di peut-être pourra être le calcul de PSNR, ou se fera via une métrique de qualité de texture objective comme par exemple la SSIM.

Dans le cas particulier d'un procédé d'encodage conforme un standard de codage vidéo tel que MPEG-2, H. 264 basé sur un codage par macroblocs (bloc de taille 16x16) et par blocs (de taille 8x8 ou 4x4), les RSR sont des macroblocs et le raffinement de texture est opérés par blocs.

Lors d'une étape 12, la carte de qualité spécifiant la position des RSR (« Quality Map » en anglais ou QM), la texture des RSR et la texture du reste de l'image sont codés en un flux F. Lors du codage de la texture, la carte de qualité QM est utilisée afin de déterminer la qualité Q0 ou Q1 (Q1 <Q0) à laquelle les différentes régions de l'image sont codées. Les RSRs sont codées à une qualité Q0 supérieure à celle Q1 du reste de l'image.

Dans le cas particulier, d'un procédé d'encodage conforme à un standard de codage vidéo tel que MPEG-2, H.264 basé sur un codage par macroblocs (bloc de taille 16x16) et par blocs (de taille 8x8 ou 4x4), les RSR sont des macroblocs. Ainsi la carte de qualité permet d'adapter les pas de quantifications (QPs) des macroblocs RSR ou non RSR. Un pas de quantification plus élevé QPmax que celui QPmin utilisé pour coder les RSR est utilisé pour quantifier les non RSR. Ceci permet d'obtenir les qualités respectives Q0 et Q1. Dans ce cadre, la carte de qualité n'a pas besoin d'être codée car les pas de quantification sont codés dans le flux. Dès lors, lors du procédé de décodage du flux F, la valeur du pas de quantification décodé pour un bloc est représentative de sa qualité de RSR ou de non RSR. En effet, si le pas de quantification décodé pour un bloc est QPmax alors ce bloc est nécessairement un non RSR alors que si le pas de quantification décodé pour un bloc est QPmin alors ce bloc est nécessairement un RSR.

Lors d'une étape 14, la texture des RSR et des non RSR est décodée par exemple selon un procédé de décodage conforme à la norme H.264 si le procédé de codage correspondant a été utilisé à l'étape 12.

Lors d'une étape 16, la texture des non RSR est raffinée. Cette étape consiste à exploiter l'information des données encodées à la qualité Q0 (i.e. les RSR) afin d'enrichir les zones encodées à la qualité Q1 (Q1<Q0). Pour se faire plusieurs algorithmes de raffinement sont possibles.

Un exemple d'algorithme de raffinement d'une région courante par une RSi peut se calculer dans le domaine transformé, avec les coefficients DCT. Cela permet d'ajouter uniquement les hautes fréquences présentes dans la RSi mais détruites dans la région courante par la quantification lors de l'encodage. Pour chaque bloc de taille $a^2$, on calcule :

$$\begin{cases} \forall i \in [0,\beta], DCT_{merged}(i) = DCT_{Q_0}(i) \\ \forall i \in \,]\beta, last\_coef\,], DCT_{merged}(i) = DCT_{Q_0}(i) + \alpha.\left(DCT_{Q_1}(i) - DCT_{Q_0}(i)\right) \end{cases}$$

où DCT(n) représente le coefficient DCT du bloc à la position n dans l'ordre zigzag. $\alpha$ et $\beta$ sont deux degrés de liberté avec :

- $\alpha$ : le poids de l'information ajoutée: $\alpha = \{0.1;0.2;...;1\}$
- $\beta$ : le premier coefficient DCT à fusionner. $\beta \in [0; a^2\text{-}1]$

D'autres approches, peuvent être utilisées dans cette étape. On citera ainsi les algorithmes de « synthèse de texture guidée » décrite dans le document de Ashikhmin intitulé *Synthesizing natural textures* et publié dans proceedings of ACM Symposium on Interactive 3D Graphics. Dans ce cas, les RSi serve de dictionnaire et la version basse qualité Q1 de la région courante à raffiner, de guide.

D'autres approches de synthèse de texture itératives plus évoluées peuvent également utiliser la version basse qualité Q1 comme itération initiale et ainsi être raffiné par l'utilisation des RSi comme décrit dans le document de Kwatra et al. intitulé *Texture optimization for example-based synthesis* et publié en 2005 dans ACM Symposium on Interactive 3D Graphics, (2005).

Bien entendu, l'invention n'est pas limitée aux exemples de réalisation mentionnés ci-dessus.

En particulier, l'homme du métier peut apporter toute variante dans les modes de réalisation exposés et les combiner pour bénéficier de leurs différents avantages. Notamment les étapes de codage 12 et de décodage 14 peuvent être conformes à la norme H.264 ou MPEG-2 mais également à JPEG ou encore à tout autre type de norme. L'invention s'applique au codage d'une image fixe ou au codage d'une séquence d'images.

**Revendications**

1. Procédé de codage d'une image divisée en sous-régions **caractérisé en ce qu'**il comprend les étapes suivantes :

    - extraire (10) de ladite image des sous-régions représentatives des autres sous-régions de l'image;
    - coder (12) lesdites sous-régions représentatives des autres sous-régions à une première qualité (Q0) ;
    - coder (12) les autres sous-régions à une seconde qualité (Q1) strictement inférieure à ladite première qualité (Q0).

2. Procédé de codage selon la revendication 1, lequel comprend en outre une étape (12) de codage d'une carte de qualité laquelle carte de qualité associe à chaque sous-région de l'image une qualité de codage parmi ladite première qualité et ladite seconde qualité.

3. Procédé de codage selon la revendication 1 ou 2, dans lequel l'étape d'extraction (10) de sous-régions représentatives des autres sous-régions de l'image comprend les étapes suivantes, pour chaque sous-région de l'image, dite sous-région courante:

    - coder ladite sous-région courante à ladite première qualité ;
    - décoder ladite sous-région courante;
    - coder les autres sous-régions différentes de ladite sous-région courante à ladite seconde qualité ;
    - décoder lesdites autres sous-régions ; et
    - calculer une métrique (Di) entre ladite sous-région courante et lesdites autres sous-régions ;
    et dans lequel l'étape d'extraction comprend en outre l'extraction de ladite image des N sous-régions dont la métrique (Di) est la plus élevée ou des N sous-régions dont la métrique (Di) est la plus faible, avec N entier.

4. Procédé de codage selon la revendication 1 ou 2, dans lequel l'étape d'extraction (10) de sous-régions représentatives des autres sous-régions de l'image comprend les étapes suivantes, pour chaque sous-région de l'image, dite sous-région courante:

    - coder ladite sous-région courante à ladite première qualité
    - décoder ladite sous-région courante;
    - coder les autres sous-régions différente de ladite sous-région courante à ladite seconde qualité ;
    - décoder lesdites autres sous-régions ;
    - raffiner la texture desdites autres sous-régions en exploitant la texture de ladite sous-région courante décodée et
    - calculer une métrique (Di) entre ladite sous-région courante et lesdites autres sous-régions raffinées;
    et dans lequel l'étape d'extraction comprend en outre l'extraction de ladite image des N sous-régions dont la métrique (Di) est la plus élevée ou des N sous-régions dont la métrique (Di) est la plus faible, avec N entier.

5. Procédé de codage selon l'une des revendications 3 ou 4, dans lequel ladite métrique est une l'information mutuelle et dans lequel l'étape d'extraction comprend l'extraction de ladite image des N sous-régions dont la métrique (Di) est la plus élevée.

6. Procédé de codage selon l'une des revendications 3 ou 4, dans lequel ladite métrique est une distorsion et dans lequel l'étape d'extraction comprend l'extraction de ladite image des N sous-régions dont la métrique (Di) est la plus faible.

7. Procédé de décodage d'au moins une image divisée en premières et secondes sous-régions, lesdites premières sous-régions étant représentatives desdites secondes sous-régions comprenant une étape de décodage (14) des premières et secondes sous-régions ledit procédé étant **caractérisé en ce qu'**il comprend une étape de raffinement (16) de la texture desdites secondes sous-régions à partir de la texture desdites premières sous-régions.

**8.** Procédé de décodage selon la revendication 7, dans lequel ladite étape de raffinement (16) comprend, le remplacement, dans un domaine fréquentiel DCT, de chacune des $\beta$ plus hautes fréquences d'une seconde sous région par la fréquence correspondante d'une première sous-région.

**9.** Procédé de décodage selon la revendication 8, dans lequel ladite étape de raffinement (16) comprend, le remplacement, dans ledit domaine fréquentiel DCT, de chacune des fréquence différente des $\beta$ plus hautes fréquences d'une seconde sous région par la fréquence correspondante d'une première sous-région.

FIGURE 1

Europäisches
Patentamt

European
Patent Office

Office européen
des brevets

## RAPPORT DE RECHERCHE EUROPEENNE

Numéro de la demande

EP 09 30 5583

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 018 070 A1 (THOMSON LICENSING [FR]) 21 janvier 2009 (2009-01-21) * abrégé * * alinéa [0010] - alinéa [0019] * * alinéa [0049] - alinéa [0067]; figures 5-9 * ----- | 1-2,7-9 | INV. H04N7/26 H04N7/50 |
| X | DONG LIU ET AL: "Manipulating image patches for compression" MULTIMEDIA AND EXPO, 2008 IEEE INTERNATIONAL CONFERENCE ON, IEEE, PISCATAWAY, NJ, USA, 23 juin 2008 (2008-06-23), pages 197-200, XP031312692 ISBN: 978-1-4244-2570-9 * le document en entier * ----- | 1-2,7-9 | |
| A | KWATRA V ET AL: "Texture optimization for example-based synthesis" ACM TRANSACTIONS ON GRAPHICS, PROCEEDINGS OF SIGGRAPH 2005, vol. 24, no. 3, 31 juillet 2005 (2005-07-31), - 4 août 2005 (2005-08-04) pages 795-802, XP002571283 Los Angeles, CA, US ISSN: 0730-0301 DOI: 10.1145/1073204.1073263 * Sections 3. et 4. * ----- -/-- | 1-9 | DOMAINES TECHNIQUES RECHERCHES (IPC) H04N |

Le présent rapport a été établi pour toutes les revendications

| Lieu de la recherche | Date d'achèvement de la recherche | Examinateur |
|---|---|---|
| La Haye | 3 mars 2010 | Colesanti, Carlo |

EPO FORM 1503 03.82 (P04C02)

Europäisches
Patentamt

European
Patent Office

Office européen
des brevets

## RAPPORT DE RECHERCHE EUROPEENNE

Numéro de la demande

EP 09 30 5583

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PATRICK NDJIKI-NYA ET AL: "Generic and Robust Video Coding with Texture Analysis and Synthesis" MULTIMEDIA AND EXPO, 2007 IEEE INTERNATIONAL CONFERENCE ON, IEEE, PI, 1 juillet 2007 (2007-07-01), pages 1447-1450, XP031123908 ISBN: 978-1-4244-1016-3 * le document en entier * ----- | 1-2,7-9 | |
| X | KHANDELIA A ET AL: "Parametric Video Compression Scheme Using AR Based Texture Synthesis" COMPUTER VISION, GRAPHICS&IMAGE PROCESSING, 2008. ICVGIP '08. SIXTH INDIAN CONFERENCE ON, IEEE, PISCATAWAY, NJ, USA, 16 décembre 2008 (2008-12-16), pages 219-225, XP031409452 ISBN: 978-0-7695-3476-3 * le document en entier * ----- | 1-2,7-9 | |
| A | LI-YI WEI ET AL: "Inverse texture synthesis" ACM TRANSACTIONS ON GRAPHICS, PROCEEDINGS OF SIGGRAPH 2008, vol. 27, no. 3, 11 août 2008 (2008-08-11), - 5 août 2008 (2008-08-05) XP002571284 Los Angeles, Ca, US ISSN: 0730-0301 * Sections 3. et 4. * ----- | 1-9 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 3 mars 2010 | Colesanti, Carlo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 30 5583

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-03-2010

| Document brevet cité au rapport de recherche | Date de publication | Membre(s) de la famille de brevet(s) | Date de publication |
|---|---|---|---|
| EP 2018070 A1 | 21-01-2009 | WO 2009010515 A1 | 22-01-2009 |

Pour tout renseignement concernant cette annexe : voir Journal Officiel de l'Office européen des brevets, No.12/82